(19) **Europäisches Patentamt**

**European Patent Office**

**Office européen des brevets**

(11) **EP 0 944 950 B1**

(12) **EUROPEAN PATENT SPECIFICATION**

(45) Date of publication and mention
of the grant of the patent:
**02.01.2004 Bulletin 2004/01**

(51) Int Cl.[7]: **H02M 1/12**, H02J 3/18,
H02P 7/62

(21) Application number: **97927196.2**

(22) Date of filing: **13.06.1997**

(86) International application number:
**PCT/FI1997/000377**

(87) International publication number:
**WO 1997/048174 (18.12.1997 Gazette 1997/54)**

(54) **MOTOR ARRANGEMENT**

MOTOR SCHALTUNG

CIRCUIT COMPRENANT UN MOTEUR

(84) Designated Contracting States:
**AT CH DE FR GB IT LI SE**

(30) Priority: **14.06.1996 FI 962485**

(43) Date of publication of application:
**29.09.1999 Bulletin 1999/39**

(73) Proprietor: **Rotatek Finland OY
53850 Lappeenranta (FI)**

(72) Inventor: **PYRHÖNEN, Juha
FIN-53850 Lappeenranta (FI)**

(74) Representative: **Kärkkäinen, Veli-Matti et al
Borenius & Co Oy Ab
Tallberginkatu 2 A
00180 Helsinki (FI)**

(56) References cited:
**EP-A- 0 361 836          EP-A- 0 682 395
US-A- 5 444 609**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a motor arrangement according to the preamble of claim 1, e.g., as disclosed in EP publication 0 361 836 A. Said prior art document discloses a commutation circuit for load commutated inverter induction motor drives, said arrangement including coils arranged between a motor and a frequency converter.

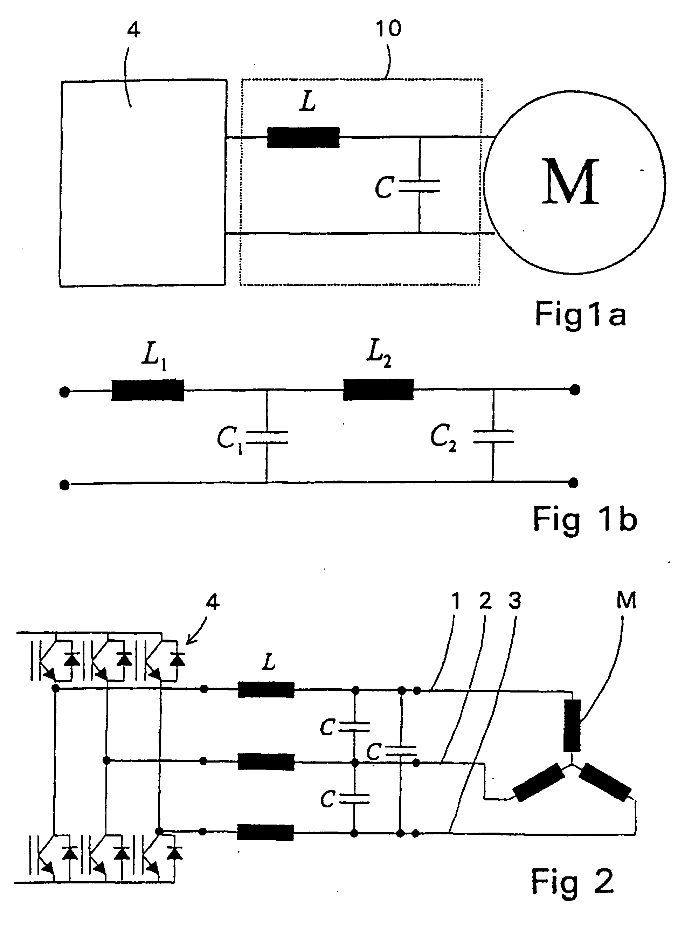

It is known to filter one or three phase supply current by so called CLC filter (coil/condenser filter) which is provided between the phase and zero for the purposes of disturbance elimination. An example of such arrangement is disclosed by EP publication No. 0 282 797 A3, figure 1 thereof illustrating the circuit diagram of the known filter. By this kind of solutions an advantage is achieved especially in the disturbance elimination of so called power electronics (EMC), ie. in protecting the environment from the radiating disturbances caused by the apparatus and/or vice versa.

Frequency transformers or converters are also known from the prior art. These are used for instance as supply devices for the AC (alternating current) motors, these being especially advantageous in adjustable electric drives. At present PWM (Pulse Width Modulation) frequency converters based on the pulse width modulation technique provided with so called voltage source circuit are the most commonly used. The skilled person is familiar with the frequency converters of different types, and they are not explained in more detail herein than by mentioning the main parts thereof, which consist of a rectifier, of a direct voltage source circuit and of an inverted rectifier (= the inverter part).

Known filters, such as the ones according to figure 1 of said EP publication No. 0 282 797 A3 cannot, however, be applied for the filtering of the current conducted between the PWM frequency converter and the motor, eg. on grounds of the reason that the current I of the phase would then become momentarily too high in the frequently occurring rapid voltage changes caused by the transverse capacitance in a three phase drive. This kind of current peaks would cause a risk for damages for the used apparatus, such as for the switches and insulations thereof. It is not possible to compensate a machine provided with a frequency converter by a condenser only, as in accordance with the formula

$$I = c \times du/dt,$$

wherein

I = current
c = capacitance
du/dt= change of voltage/time

an extremely high current peak would become generated to the output thereof as a result of the high voltage pulse from the frequency converter, which would then be destructive to the apparatus.

The frequency converter drive causes losses to the short circuit motor mainly by the following three manners: 1) the high frequency current components cause a pinch effect of the current in the winding of the machine. Especially, in case the winding of the machine has been produced from formed copper, the disturbances caused by the pinch effect of the current will rise. 2) The high frequency current components cause, despite the attenuating effect of the distributed inductance, also high frequency components to the main flux of the machine, which will increase the iron losses of the machine. 3) The rotor surface of the machine is especially liable for interference in the frequency converter use. When the amplitude of the main flux of the machine oscillates due to the harmonics of the current, the eddy currents induced into a squirrel cage of the rotor tend to attenuate this oscillation, whereby losses are generated.

There is a need, especially in connection with so called solid rotor motors, to filter the current supplied therein. As a distinction to the common machines provided with laminated rotors the solid rotor machine comprises a solid rotor which is usually manufactured from a suitable steel material. In some instances suitable additional parts are attached to the solid rotor body of steel, such as different coatings or so called copper cage and/or short circuit rings. By means of the solid rotor advantages are obtainable eg. in view of the stiffness, good vibrations attenuation characteristics and an easy and economical manufacture of the rotor. Different solid rotors are disclosed eg. by GB patents Nos. 1 427 818 and 1 429 826, DE patent No. 36 41 142 or FI patent No. 92114 and FI patent application No. 932732.

The disadvantage of the solid rotor solutions has, however, been the poor efficiency and power ratio thereof. Due to a higher reactive power the current required by them is. essentially higher than what it is in machines provided with laminated rotors. When trying to improve the characteristics thereof eg. by supplying current by means of the above described frequency converter means some further problems have arisen, for instance in that sufficiently big/ effective or suitable frequency converter means are not available to all applications. In addition, the price of the frequency converter means increases greatly as the power thereof increases, which makes the utilization thereof uneconomical. The electric current supplied by the frequency converter means has also a form which is essentially remote from the sinusoidal shape considered as ideal. In addition, the pulse shaped voltage provided by them causes high voltage stresses to the components of the equipment, such as to the isolations and the switches.

An object of the present invention is to overcome the disadvantages of the prior art and to provide a new solution for filtering the current supplied to an electric machine, especially an electric motor provided with a solid rotor, in connection with voltage source circuit solutions so that it is possible to compensate the reactive current portion from the essential parts thereof.

It is also an object to provide a filtering solution by means of which the efficiency of an electric motor drive is improved.

It is a further object of the invention to provide a solution, by means of which it is possible to reduce the size of an electric current supply device, such as a frequency converter provided with a voltage source circuit, and/or to increase the efficient and economical range of operation thereof.

An additional object of the invention is to provide a solution, by means of which the voltage of the motor is brought sufficiently close to sinusoidal.

An additional object of the invention is a method and an apparatus, by means of which the coupling frequency of a frequency converter means can be lowered.

According to the present invention said objects are achieved in a motor arrangement as discussed in the preamble, in which arrangement the motor is a solid rotor motor and the frequency converter means comprise a Pulse Width Modulation frequency converter wherein the filter means are connected symmetrically to all phases and wherein the capacitor means essentially compensate the reactive current of the motor and increase the power factor thereof, as disclosed in the characterizing portion of claim 1.

Thus, a current supplied from a frequency converter means provided with a voltage source circuit is conducted to the motor through a coil means arranged between the frequency converter means and the motor in order to prevent any essential rapid increases of the current. The reactive current portion of the motor is compensated by a condenser means located between the frequency converter means provided with the voltage source circuit and the motor.

Significant advantages are obtained by means of the present invention. By means of the solution according to the invention a filtering arrangement is provided which is easy and economical to implement, and by means of which it is possible to reduce the size of the required current supplying apparatus, such as frequency converters, and it is possible to increase the current range of the motor within which it is still possible to use frequency converters. The above is enabled because the current, which the machine takes from the frequency converter means, is essentially decreased and because the size of the frequency converter means is especially defined by the current of the inverter part. By means of the invention it is possible to get close to the ideal sinusoidal supply of electric also in the frequency converter supply provided with a voltage source circuit. This provides, in addition to those benefits well known in the art, also that advantage that the use of a voltage and current which are as sinusoidal as possible reduces significantly the bearing currents of the bearings being in contact, and thus increases the life time of the bearings. This provides a special advantage for the medium speed machines, since these operate usually in such rotational speed ranges in which ball bearings are used. The arrangement also enables a situation in which the current from the frequency converter is almost exclusively active current. In the conventional solid rotor machines one problem has been, as was described above, the poor efficiency, as the active and reactive power are about the same, the present solution being advantageous in avoiding this disadvantage. An additional advantage is obtained in that the isolations of the used apparatus will become more durable as the voltage peaks are removed, whereby it is possible to lower the requirements set for them and thus the price thereof. Furthermore, the phase voltage in the frequency converter supply can be increased without any need for essentially strengthening the isolations, especially when big medium speed machines are concerned. The EMC disturbances will also decrease essentially. In addition, it is also possible to lower the connection frequency, eg. from 12 kHz to 3 kHz, by a suitable design of the inventive apparatus, which further. improves the obtainable overall efficiency of the drive. Furthermore, the eddy currents are decreased both in the stator laminations and especially on the surface of the rotor. In addition, the noise level caused by the electric phenomenons of the drive is lowered significantly. It is possible to minimize the current peaks passing through the ground capacitance of the possibly long motor cable by disposing the LC filter in the inverter output. The invention enables also a compensation of the voltage source circuit inverter, which has been previously considered as impossible.

In the following the present invention and advantages thereof will now be described in exemplifying manner with reference to the annexed drawing, in which similar reference characters throughout the various figures refer to similar features. It should be understood that the following exemplifying description of the invention is not meant to restrict the invention to the specific forms presented in this connection but rather the present invention is meant to cover all modifications thereof as defined in the appended claims. In the drawings:

Figures 1a and 1b     disclose motor diagrams for one phase according to the present invention,

Figure 2                 discloses a symmetrical circuit diagram provided for a three phase arrangement in accordance with one embodiment of the invention,

Figures 3a and 3b    disclose as graphical views the ratio of the reactive. and active powers for a laminated rotor machine and respectively a solid rotor machine when using a current supply according to the prior art,

Figure 4    discloses a corresponding diagram to that of figure 3 but now using the arrangement according to figure 2, ie. according to the invention, and

Figure 5    discloses the shape of the motor current obtainable by the prior art.

Figure 1a discloses a schematic example of a connection arrangement for a one phase motor in accordance with the present invention. It discloses a LC filtering arrangement 10, designated by the dashed lines, which is connected between a frequency converter means 4 and a motor means 4, and comprising a coil L and a condenser C. In the LC filter 10 it is a general task of the inductance to protect the frequency converter part 4, especially the switches thereof, from too rapidly occurring current rise and a general task of the condenser is to compensate the reactive current portion of the solid rotor machine. The compensating and the voltage filtering are accomplished by means of the condenser C disposed between two different phases. They can be arranged in a delta (Figure 2) or they can also be arranged in a star connection.

Figure 1b discloses a per se corresponding arrangement to Figure 1a, but in this the order of the filters has been increased by one. In most cases this provides a better result in view of the filtering efficiency than what is obtainable by the single filter 10 according to figure la. It is to be noted that it is not necessary for the coils $L_1$ and $L_2$ and the condensers $C_1$ and $C_2$ to be similar from the nominal values thereof. According to one preferred solution eg. the coil $L_1$ is greater than the coil $L_2$. In addition, the order of the filters may, naturally, be greater than two, and the components of each of the orders of the filters may be selected on basis of different criterions.

Figure 2 discloses a voltage source inverter coupling according to the present invention, which is accomplished symmetrically to all three phases 1, 2 and 3. The coil means L is disposed in each phase after the frequency converter means 4, whereafter condenser means C are disposed such that an equal capacitance is provided between two phases (1,2; 1,3; 2,3). A star coupling is also possible, as well as a delta coupling of the motor M. It is also possible to use such amount of phases which differs from three, such as an arrangement having two, five or seven phases.

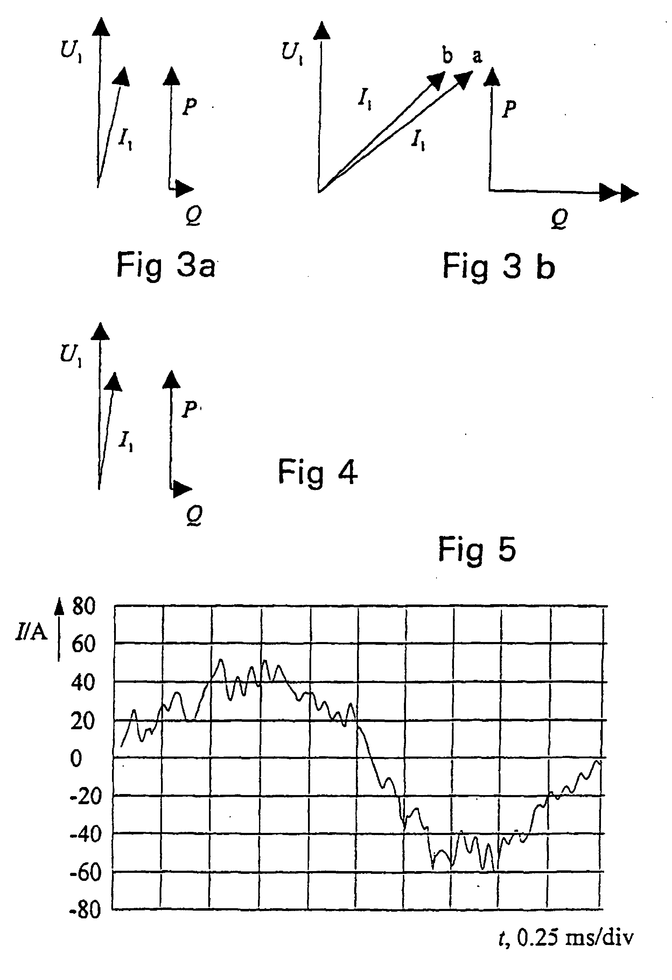

Figure 3a discloses a phasor diagram of the base waves of current and voltage for a motor provided with a laminated rotor, ie. for a "plate rotor" motor in an arrangement which uses prior art frequency converter type current supply. In addition, the relation between active and reactive power (P, Q) for the same solution is also disclosed. The efficiency coefficient for this kind of arrangement is usually about 0.8 to 0.9.

Figure 3b discloses a corresponding prior art situation for solid rotor motor, wherein indicator a) corresponds to a situation in which an uniform, from one piece manufactured Fe rotor is used and b) a situation in which the Fe rotor is provided with a prior art copper squirrel cage. As can be seen from the relation between the active and the reactive powers (P, Q), the reactive current forms an essential portion of the total current, and thus the efficiency coefficient of the solid rotor machine obtainable by the frequency converter supply is generally only about 0.5 to 0.7.

The above phenomenon is caused by the fact that in the solid rotor it is not possible to separate the magnetic and electric circuits from each other, as is the intention in connection with the laminated induction rotor provided with an iron core. As a result of this, the generally known Maxwell equations give, with no options, such a result in which the phase angle of the rotor impedance is too high. In a theoretical situation, when using a linear non-magnetically saturated material, a 45° phase angle is obtained. It is possible to lower the rotor impedance phase angle in case of a saturating iron by different grooves and/or copper cages. However, as the effect of the air gap and the distributed inductance has to be taken under consideration, the result is that the efficiency coefficient of a solid rotor may in maximum be only about 0.7, as has been discussed above.

The view of Figure 4 discloses a corresponding base wave phasor diagram of the current and the voltage and also for the ratio of the active and the reactive power (P, Q) for the solution of the present invention disclosed by figure 2. In this the relative proportion of the reactive current is substantially smaller than the same for the active current, which results, naturally, to an improved efficiency. Depending on the used currents, powers, frequency etc. parameters, it is possible, by means of the present inventive arrangement, to significantly rise the efficiency of the solid rotor machine up to a value 0.9, and in most cases, depending on the used parameters, also over that.

Thus, by means of the arrangement according to the present invention it is possible to compensate the reactive power Q essentially in its entirety. Since the compensating has not been possible in the prior art solutions, it has been necessary to dimension the frequency converters provided with a voltage source circuit to take this essentially great reactive current into account, which has lead to an undesired and per se useless increase of the size thereof.

When operating according to the invention, it is possible, however, to reduce the size of the frequency converters and the inverters thereof of about 30 %, and by means of a precise dimensioning and optimization even more, which has a significant effect to, for instance, the price thereof. In addition, it is now possible to use a same frequency converter to a wider current/power range, which reduces the need of having several frequency converters of different sizes, and makes it possible to use the already commercially available frequency converters in connection with motors having greater power than what has been possible this far. The current of the most powerful and expensive frequency converters having a voltage less than 1000 V has been about 1 kA, but generally the greatest economically wise frequency converters have been in a size class of 500 to 700 A. Several frequency converters have been occasionally combined for the greater current needs, but this has not been wise in economical sense.

By suitable dimensioning it is also possible to lower the coupling frequency of the frequency converter. The 12 kHz frequency 'generally used at present causes a loss of about 5 to 10 % in the motor efficiency. If the frequency has been lowered from this, it has caused different vibrations in the rotor current, especially when greater machines are concerned, which has further decreased the efficiency, even though the decrease in the frequency per se would be desirable so as to improve the efficiency of the frequency converter. The vibrations are caused by the fact that the voltage given by the frequency converter is far away from the ideal sinusoidal curve, this difference increasing as the frequency decreases. As the transient inductance is typically low, the current ripple increases heavily.

Figure 5 discloses one result for the current shape of a 12 kW solid rotor machine by 12 kHz coupling frequency obtained by the prior art, ie. without the filtering according to the present invention. It can be readily noted that the current differs substantially much form sinusoidal. This is caused by the fact that already at such solid rotor machines which are rotating at relatively low speeds it is necessary to use substantially small number of winding laps, whereby all inductances of the machine, and especially the transient inductance thereof, are formed to be essentially low, as was described above, whereby a significant current ripple is generated into the machine. A part of the current ripple causes fluctuation of the main flux of the machine, which has an essential, of order of about 5 %, deteriorating effect to the efficiency of the machine. Thus the sinusoidal current gives a significant advantage when solid rotor machines are concerned. In the prior art an as sinusoidal current as possible has been tried to be obtained by increasing the coupling frequency.

The filters 10 transform the current essentially close to the sinusoidal considered as advantageous, whereby the discontinuities shown by Figure 5 are smoothened and they essentially disappear. In addition, the inventive filters filter the current to that extend that it is possible to lower the frequency in the frequency converter drives eg. to a value of 3 kHz without the above mentioned disadvantageous effects and thus the efficiency of the machine M can be further increased.

It is to be noted that the above examples of the embodiments of the invention are not limiting the scope of the invention as defined by the claims.

**Claims**

1. A motor arrangement including a multi-phase electric motor (M) and a frequency converter means (4) comprising a voltage source circuit, for supplying a current to be conducted to said motor (M), the arrangement further including a filtering means (10) comprising coil means (L; $L_1$,$L_2$) arranged between said motor (M) and said converter means (4) as well as capacitor means (C; $C_1$,$C_2$) connected to each phase (1, 2, 3) after said coil means (L; $L_1$, $L_2$) seen in the direction of the current flow, **characterized in that** said motor (M) is a solid rotor motor and said frequency converter means (4) comprise a Pulse Width Modulation (PWM) frequency converter wherein said filtering means (10) are connected symmetrically in relation to all phases (1,2,3) and wherein the capacitor means (C; $C_1$,$C_2$) essentially compensate the reactive current of the motor (M) and increase the power factor thereof.

2. A motor arrangement according to claim 1, **characterized in that** said motor (M) is a three phase solid rotor induction motor.

3. A motor arrangement according to claim 1, **characterized in that** the arrangement is adapted for symmetrically feeding a multi-phase motor such as a two, five or seven phase solid rotor induction motor (M).

4. A motor arrangement according to claim 2 or 3, **characterized in that** said capacitor means (C; $C_1$,$C_2$) are connected between two different phases (1,2; 1,3; 2,3) feeding said multi-phase motor (M).

5. A motor arrangement according to any one of claims 1 to 4, **characterized in that** said solid rotor motor includes additional rotor parts which are attached to a rotor body which suitably is made'of steel.

6. A motor arrangement according to any of claims 1 to 5, **characterized in that** several filtering means (10) are arranged successively between said frequency converter means (4) and said motor (M).

**7.** A motor arrangement according to claim 6, **characterized in that** the values of the corresponding components (L,C; $L_1$,$C_1$; $L_2$,$C_2$) of said successively arranged filtering means (10) are unequal.

**Patentansprüche**

**1.** Motoranordnung mit einem Mehrphasen-Elektromotor (M) und einem Frequenzumsetzungsmittel (4) mit einem Spannungsquellenschaltung zum Zuführen eines Stromes, der zu dem Motor (M) zu leiten ist, wobei der Anordnung ferner ein Filtermittel (10) mit Spulenmitteln (L; $L_1$, $L_2$), die zwischen dem Motor (M) und dem Umsetzungsmittel (4) angeordnet sind, und Kapazitätsmitteln (C; $C_1$, $C_2$) aufweist, die mit jeder Phase (1, 2, 3) nach den Spulenmitteln (L; $L_1$, $L_2$), gesehen in der Richtung des Stromflusses, verbunden sind, **dadurch gekennzeichnet, dass** der Motor (M) ein Motor mit massivem Rotor ist, und die Frequenzumsetzungsmittel (4) einen Pulsbreiten-Modulations (Pulse Width Modulation, PWM) - Frequenzumwandler aufweisen, wobei die Filtermittel (10) symmetrisch bezüglich sämtlicher Phasen (1, 2, 3) angeschlossen sind, und wobei die Kapazitätsmittel (C; $C_1$, $C_2$) im wesentlichen den Reaktionsstrom des Motors (M) kompensieren, und den Leistungsfaktor desselben erhöhen.

**2.** Motoranordnung nach Anspruch 1, **dadurch gekennzeichnet, dass** der Motor (M) ein dreiphasiger Induktionsmotor mit massivem Rotor ist.

**3.** Motoranordnung nach Anspruch 1, **dadurch gekennzeichnet, dass** die Anordnung für ein symmetrisches Zuführen eines Mehrphasenmotors, wie z.B. eines zwei- fünf- oder siebenphasigen Induktionsmotors mit massivem Rotor (M) angepasst ist.

**4.** Motoranordnung nach Anspruch 2 oder 3, **dadurch gekennzeichnet, dass** die Kapazitätsmittel (C; $C_1$, $C_2$) zwischen zwei unterschiedlichen Phasen (1, 2; 1, 3; 2,3) angeschlossen sind, die dem Mehrphasenmotor (M) zuführen.

**5.** Motoranordnung nach einem der Ansprüche 1 bis 4, **dadurch gekennzeichnet, dass** der Motor mit massivem Rotor zusätzliche Rotorteile aufweist, die an einen Rotorkörper angebracht sind, der in geeigneter Weise aus Stahl ausgeführt ist.

**6.** Motoranordnung nach einem der Ansprüche 1 bis 5, **dadurch gekennzeichnet, dass** mehrere Filtermittel (10) nacheinander zwischen den Frequenzumsetzungsmitteln (4) und dem Motor (M) angeordnet sind.

**7.** Motoranordnung nach Anspruch 6, **dadurch gekennzeichnet, dass** die Werte der entsprechenden Komponenten (L,C; $L_1$, $C_1$; $L_2$, $C_2$) der aufeinanderfolgend angeordneten Filtermittel (10) ungleich sind.

**Revendications**

**1.** Agencement de moteur comportant un moteur électrique polyphasé (M) et un moyen convertisseur de fréquences (4) comprenant un circuit de source de tension, pour fournir un courant à conduire audit moteur (M), l'agencement comportant en outre un moyen filtrant (10) comprenant des moyens formant bobine (L ; $L_1$, $L_2$) disposés entre ledit moteur (M) et ledit moyen convertisseur (4) ainsi que des moyens formant condensateur (C ; $C_1$, $C_2$) connectés à chaque phase (1, 2, 3) en aval desdits moyens formant bobine (L ; $L_1$, $L_2$) vu dans la direction de l'écoulement du courant, **caractérisé en ce que** ledit moteur (M) est un moteur à rotor solide, et ledit moyen convertisseur de fréquence (4) comprend un convertisseur de fréquence à modulation de largeur d'impulsions (PWM), où lesdits moyens filtrants (10) sont connectés symétriquement en relation à toutes les phases (1, 2, 3), et où les moyens formant condensateur (C ; $C_1$, $C_2$) compensent essentiellement le courant réactif du moteur (M) et augmentent le facteur de puissance de celui-ci.

**2.** Agencement de moteur selon la revendication 1, **caractérisé en ce que** ledit moteur (M) est un moteur à induction à rotor solide triphasé.

**3.** Agencement de moteur selon la revendication 1, **caractérisé en ce que** l'agencement est conçu pour alimenter symétriquement un moteur polyphasé, comme un moteur à induction à rotor solide à deux, cinq ou sept phases (M).

**4.** Agencement de moteur selon la revendication 2 ou 3, **caractérisé en ce que** lesdits moyens formant condensateur

(C ; $C_1$, $C_2$) sont connectés entre deux phases différentes (1, 2 ; 1, 3 ; 2, 3) alimentant ledit moteur polyphasé (M).

5. Agencement de moteur selon l'une des revendications 1 à 4, **caractérisé en ce que** ledit moteur à rotor solide comporte des parties de rotor additionnelles qui sont fixées à un corps de rotor qui est réalisé d'une manière appropriée en acier.

6. Agencement de moteur selon l' une des revendications 1 à 5, **caractérisé en ce que** plusieurs moyens filtrants (10) sont agencés successivement entre ledit moyen convertisseur de fréquences (4) et ledit moteur (M).

7. Agencement de moteur selon la revendication 6, **caractérisé en ce que** les valeurs des composants correspondants (L, C ; $L_1$, $C_1$ ; $L_2$, $C_2$) desdits moyens filtrants (10) agencés successivement sont inégales.

Fig1a

Fig 1b

Fig 2

Fig 3a

Fig 3 b

Fig 4

Fig 5

$t$, 0.25 ms/div